Europäisches Patentamt

(19) European Patent Office

Office européen des brevets

(11) Publication number: **0 261 311 B1**

## (12) EUROPEAN PATENT SPECIFICATION

(45) Date of publication of patent specification:
**13.11.91 Bulletin 91/46**

(51) Int. Cl.⁵: **H01M 2/30, H01M 10/06, B21K 21/00**

(21) Application number: **87107904.2**

(22) Date of filing: **01.06.87**

(54) **Process for the production of an electrical battery pole or terminal, relating equipment and electrical battery pole or terminal thereby obtained.**

(30) Priority: **23.09.86 IT 2179286**

(43) Date of publication of application:
**30.03.88 Bulletin 88/13**

(45) Publication of the grant of the patent:
**13.11.91 Bulletin 91/46**

(84) Designated Contracting States:
**AT BE CH DE ES FR GB GR LI LU NL SE**

(56) References cited:
**EP-A- 0 040 951**
**EP-A- 0 116 877**
**GB-A- 1 245 255**
**US-A- 4 452 060**

(73) Proprietor: **AQUILA PIOMBO S.R.L.**
**Via Firenze 1/3**
**I-Cellatica (Brescia) (IT)**

(72) Inventor: **Scotti, Giorgio**
**via Silvio Pellico 24**
**I-25100 Brescia (IT)**

(74) Representative: **Lecce, Giovanni**
**Dott. Giovanni Lecce & C. S.r.l. Via G. Negri 10**
**I-20123 Milano (IT)**

EP 0 261 311 B1

## Description

This invention refers to a process for obtaining an electrical battery pole or terminal, an equipment to develop such process as well as the electrical battery pole or terminal thereby obtained.

A process and an apparatus therefor for producing hollow metal articles of cylindrical shape featuring a circumferential ring is known from EP-A-0,116,877. However, this process and apparatus are not designed to produce an electrical battery pole or terminal leaving a truncated conical shape.

As is known, so as to make an electrical battery pole or terminal, complex processes are usually employed requiring a number of operations and involving comparatively long times for the production of said pole.

One of the methods usually employed to produce an electrical battery pole or terminal is the so-called drop casting. This method allows obtaining an electrical battery pole, initial shape and structure of which would satisfy the requirements asked of this battery element, but which has the shortcoming of causing easily acid sweating from battery owing to presence of harmful blowholes in pole structure which allow said acid outcoming.

Another method to produce electrical battery poles is pressure casting. This, as is known, essentially consists in causing material for production of pole to melt by pressure in a pump-operated die.

Either of the two above-said methods produces electrical battery poles which besides the above-said shortcoming present size inaccuracies affecting negatively working tolerances.

This latter shortcoming involves difficulties for the application of the pole or terminal to the battery cover by using present units for automatic feed of pole or terminal, which are applied to presses for injection/moulding of the covers themselves.

The above very clearly reveals the shortcomings and disadvantages of the processes known and which virtually also apply to relating equipment used. Above processes in fact require a number of operations to be carried out in a pre-determined and immutable sequence, including first the melting of the metal employed, then the pole-making operation (by drop or by pressure) and last, piece cooling off which operation is to be carried out slowly, thus considerably lengthening processing times.

In addition, melting of metal employed for the production of battery poles or terminals, necessarily involves accurate equipment operating temperature checks so as not to damage metal molecular structure which should present whole so as to allow satisfactory battery operating.

Such check is especially felt as regards current conduction which takes up particularly intense values during motor start-up.

Processing modes of pole production too must be accurately c⸺cked, especially end operation of cooling, which must necessarily be carried out gradually so as not to damage, in this case too, structure of pole obtained, as well as, for instance, not to cause work-hardenings of metal which would weaken pole structure, thus rendering it hardly suitable to withstand stresses or be run through by intense currents.

This invention envisages a process as defined in Cl. 1 and 2 for obtaining an electrical battery pole or terminal, such as allowing eliminating and solving of all above-complained shortcomings, both as regards size accuracy and aesthetic appearance, and structure of pole obtained.

Besides, this invention envisages an equipment as defined in Cl. 3 said process, as well as an electrical battery pole or terminal free of above-said shortcomings and offering constant reliability features such as to assure a satisfactory operating and long-life of battery.

Further embodiments of the present equipment are defined in Cl. 4 to 8. By this invention, the process for the production of an electrical battery pole or terminal includes:
a) a preliminary cold moulding processing stage of an essentially cylindrical metal block which is pressed between a first and a second die; the first keeps the block in a stable position, while the second inserts said block into a cavity obtained in the first and the second die for forming a semi-finished product essentially corresponding to finished pole, as block part being inserted into second die is subjected to a further expansion action, thereby essentially parallel one to the other, protruding outer ribs on said end of pole are achieved; and b) a second processing stage of blanking or milling of ends of semi-finished product taken out of dies, so as to achieve the finished battery pole. The equipment, it too object of this invention, to develop above process, consists of two co-working dies: of which a first die, vertically travelling with respect to a second die, is provided with a cavity complementarily shaped to configuration of pole to obtain, said cavity being in its upper part closed by a moving punch; and a second, stationary die, provided with a second moving punch which inserts into cavity of first moving die. Said second punch travels in a cavity obtained in second die at which free end, corresponding to shaped cavity, recesses are provided, for formation of rib of pole to make.

One of fundamental features of this invention is that the battery pole is achieved through a so definable "cold" process, in that initial operation of metal melting is entirely done away with and metal is then room-temperature processed. As a consequence, also the cooling off stage is eliminated, thus considerably reducing operating times as compared to known processes and equipment.

The electrical battery pole or terminal, achieved by said process and equipment, is free of all those above-mentioned defects encountered on known poles or terminals, thus assuring battery long-life and satisfactory operation. Therefore, this invention constitutes a remarkable development over known technique, having first and foremost done away with the shortcoming of insufficient comptactness in structure of the material of the pole, having enabled automatic feed of presses shaping the covers, and having improved aesthetic appearance of the pole itself, which thus results of extremely higher quality as compared to those achieved by known processes and equipment. The process of this invention is extremely simple and requires no checks, as it allows making an electrical battery pole or terminal by means of two simple processing stages, the first of which consisting in achieving what may be defined a semi-finished product, although it is practically already the almost-finished pole, and the second in achieving the finished pole by means of a simple blanking or milling. The two said processing stages are "cold"-carried out, that is to say, at room temperature or at any rate with no heating or melting of metal employed occurring.

The equipment, it too object of this invention, also results extremely simple in its configuration and allows achieving of stages of above-said process, especially the obtaining of the "semi-finished product" by compression, with no special difficulty.

The electrical battery pole or terminal produced by the process and equipment of this invention, offers constant reliability features such as to make it of quality superior to those at present being marketed.

Features and advantages of process, equipment, and electrical battery pole or terminal by this invention, will more clearly result by detailed description that follows, in which attached figures representing a form of exemplificative, illustrative but not limitative construction of this invention are referred to, and in which:

 fig. 1 is a schematic view of longitudinal section of equipment by the invention;

 fig. 2 is a view analogue to fig. 1 during moulding;

 fig. 3 is a view analogue to figures 1 and 2 during taking out of semi-finished product;

 fig. 4 is a schematic view depicting second processing stage of process by the invention; and

 fig.5 is a prospective schematic view of electrical battery pole or terminal by this invention, with a partial removal. During following description, figures 1 through 3 are first referred to, so as to describe exemplificative form of both the equipment and first stage of process of this invention, and then figures 4 and 5 so as to describe second stage of process and the pole thus obtained.

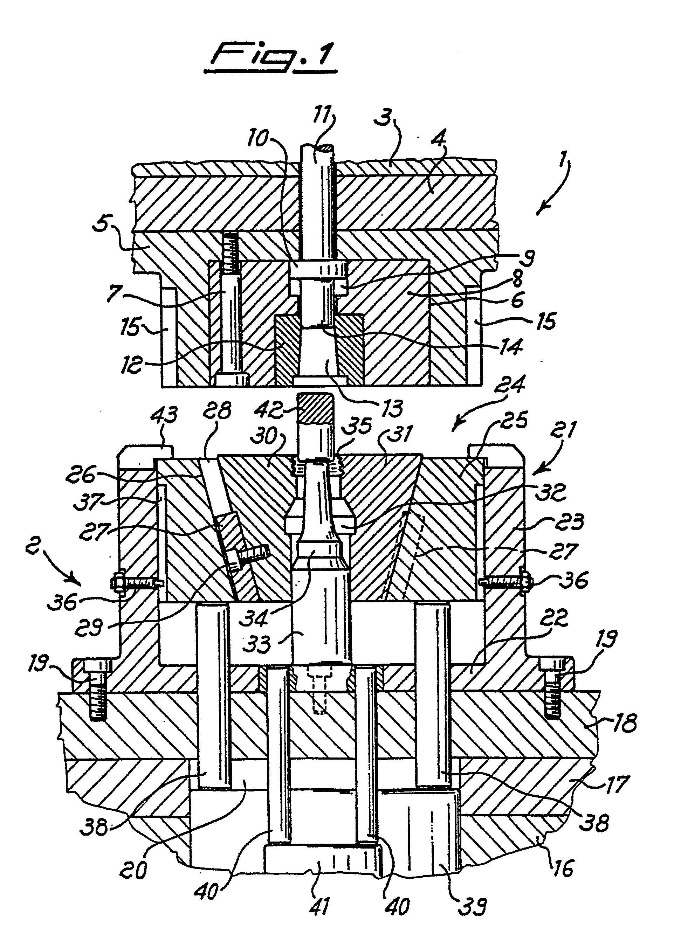

With reference to figures 1 through 3, the equipment, by the invention, for making the "semi-finished product" includes a moulding machine or station essentially consisting of two moulding dies 1 and 2.

The first moulding die 1 is supported by known means (not represented) allowing it to move vertically towards second die 2 for moulding and to move away from this latter so as to allow taking out of semi-finished product obtained.

Second die 2, positioned below first die 1, is essentially stationary and equipped with a moving section, hereinafter described, allowing removal of semi-finished product from moulding station.

First die 1 essentially consists of a first crosspiece or upper crosspiece 3 which is made integral to a second crosspiece 4. First crosspiece 3 is supported in a known way by supporting means (not represented); allowing it to move vertically downwards, during first stage of process, and to move upwards during second stage of process.

A further crosspiece 5 is fixed to lower crosspiece 4 and provided, in its lower part, with an essentially cylindrical cavity 6 within which a block 8 is fixed by means of a lock screw 7 running through said block and screwing in crosspiece 5.

Block 8 presents, in its upper center part along the longitudinal axis, an essentially cylindrical cavity 9 within which a protruding ring 10 of a punch 11 can travel. Bald punch 11 runs through corresponding apertures in crosspieces 3, 4 and 5. In lower part of block 8 and coaxially to cavity 9, there is fixed, in a whatever known way, in a corresponding cavity, a second block 12, which presents an essentially longitudinal cavity 13 and coaxial to punch 11.

Cavity 13 is shaped so as both to receive lower end 14 of punch 11, and to achieve shaping of that which will be the battery pole part protruding from cover of battery.

As may be observed in figure 1 especially, longitudinal cavity 13 of second block 12 is through-type from one end to the other of block 12 and in particular from upper end, lower end of punch 14 is inserted into block 12.

In upper part, shape of longitudinal cavity 13 is essentially cylindrical truncated-conical, with downwards increasing radius, and ending at lower end with an essentially cylindrical portion of small thickness but of diameter larger than that of upper part.

Further, on its contour and in particular on contour of crosspiece 5, first die 1 presents longitudinal grooves 15 which serve as guide for its downwards and upwards vertical travel, co-operating with second die 2 and driving first die 1 with respect to second die 2.

Second die 2 presents supporting crosspieces of which lower crosspieces are indicated with 16 and 17 and made integral, in a whatever known way, to frame of equipment.

To second stationary crosspiece 17, a further stationary crosspiece 18 is fixed to which upper part second die 2 is fixed by means of screws 19. Lower crosspieces 16 and 17 present an essentially cylindrical central cavity 20 within which supporting and travel elements, hereinafter explained, are positioned and within which they can travel.

Second die 2 consists of an essentially cylindrical, internally hollow supporting body 21 which encloses and supports die's moulding elements.

Supporting element 21 cavity consists of a lower wall or bottom 22, which is fixed, by means of screws 19, to stationary crosspiece 18, and of a vertical, lateral cylindrical wall 23. Within said cavity, operating elements of die 2 are positioned.

Said operating elements of die 2 include forming means of one of ends of battery pole or terminal, which are indicated in the assembly with 24. Said forming means include first supporting means 25 of a second operating punch 33. Said forming means are externally of an essentially cylindrical shape, which co-operates with internal surface of lateral wall 23.

First supporting means 25 define internally a cavity of increasing diameter towards first die 1. In particular, such means 25 form internally a cavity of truncated-conical shape with minor base arranged in lower part corresponding to bottom 22 and major base towards first die 1. On internal wall 26 of first supporting means 25, driving means 27 run consisting of an essentially parallelepipedal block, one side of which runs in a guide 28 on internal wall 26 of first supporting means 25, and the other side is fixed, by means of a screw 29, to second supporting means, hereinafter described, of operating punch of second die 2.

Second supporting means of operating punch 33 of second die 2 consist of an essentially truncated-conical body of cross section corresponding to cavity delimited by first supporting means 25.

Said truncated-conical body consists of 2 portions 30, 31, each of which corresponding to half of said essentially truncated-conical body.

To each half 30, 31, of above truncated-conical body, driving blocks 27, by means of screws 29, are fixed; said blocks, by travelling along walls 26, enable each half 30, 31 to move upwards and away one from the other or downwards to approach one to the other.

Second supporting and driving means of second operating punch 33 internally present, corresponding to their longitudinal axis and coaxially to cavity 13 of first die 1, a shaped cavity 32, form of which corresponds in its lower part to that of second operating punch 33, whereas upper part reproduces outer battery pole or terminal shape.

As illustrated in particular in figure 1, lower part of cavity 32, delimited by portions 30, 31 of second supporting means, presents a form that, from top to bottom, is essentially cylindrical, truncated-conical to become finally again cylindrical, which form corresponds to shape of corresponding portion 34 of operating punch 33.

On upper section of cavity 32, each portion 30, 31 presents recesses 35, essentially parallel one to the other and defining essentially circular grooves of semi-circular cross section by means of which lower part of battery pole or terminal by the invention shall be achieved. Said pole or terminal shall correspondingly present outer protruding ribs, they too of cross section, essentially of semi-circular section and parallel one to the other.

First supporting means 25 of operating punch 33 are provided with guides constituted by screws 36 screwed on vertical wall 23 of supporting wall 22, and internally protruding from said wall 23. End of said screws 36 is inserted into an outer longitudinal cavity 37 on outer wall of first supporting means 25 of operating punch 33.

Thus, first supporting means 25 of operating punch 33 are enabled to travel vertically upwards and downwards without their rotating around longitudinal axis of punch.

In the same way, thanks to driving blocks 27 travelling into grooves 28 of first supporting means 25, they allow vertical upwards and downwards travel of operating punch's 33 second supporting and driving means without their being rotated. Besides, second moulding die 2 is provided with two supporting cylinders 38 of pre-fixed height, which at one end engage with first supporting and driving means 25 of operating punch 33, and, at the other, rest, in a known way and not represented in figure, on a travelling, supporting and driving crosspiece 39, within a cavity delimited by lower crosspieces 16 and 17.

Two second cylinders 40, also of pre-fixed height, engage at their lower end with a vertically travelling block 41 which is actuated by known means, such as for instance punch means, and, at their upper end, cross horizontal supporting wall 22 and engage with second supporting and driving means 30, 31 of operating punch 33.

The equipment for the production of the semi-finished product operates as follows:

A metal cylinder 42, of lead, for instance, constitutes starting piece for making of pole by this invention.

Block 42 is initially positioned on top of operating punch 33 through an upper aperture of means 30, 31 whereas supporting and driving means 25, 30, 31 of operating punch 33 are located, as represented in figure 1, in raised position. In such position, first supporting and driving means 25 are faceplated to a projection 43 on wall 23, which constitutes an end of travel to upwards feed of said first means 25.

Once metal block 42 has been thus pre-set, first die 1 is lowered, pushing supporting and driving means 25, 30, 31 on to supporting wall 22. Operating punch 33 pushes metal block 42 into cavity 13 of first die.

Metal punch 42 is thus subjected to compression according to an essentially axial direction, in which one of its portions is shaped correspondingly to that which shall be outer part of battery pole or terminal, whereas the other end, in particular that now resulting the lower one, is simultaneously subjected to radial expansion and compression, in that, given particular shape of operating punch 33, to action of compression there associates that causing expansion of metal block towards the outside for formation of said ribs. Besides moulding dies 1, 2, also punches 11 and 33 to them related, simultaneously co-operate in these compression and compression-expansion actions.

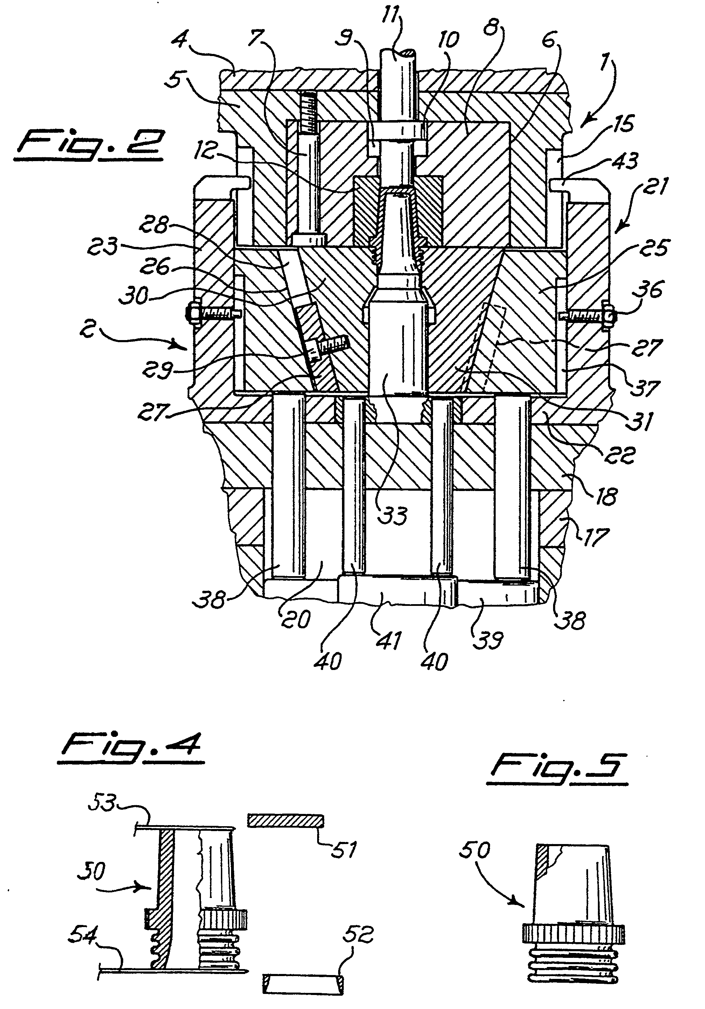

In particular, punch 33 inserts for almost the totality of height of block 42, as results in figure 2 in particular, and co-operates simultaneously with first and second die 1, 2.

During this processing stage of process, first punch 11 exerts only a contraposition action to that operated by second punch 33 since, as results from examining figures 1 and 2, operating position of first punch 11 is stationary as its protruding ring 10 remains constantly in contact with upper crosspiece 5.

During this first processing stage above-described, the so-called "semi-finished product" is therefore obtained, which essentially consists of the virtually complete battery pole, but which shall be ended up during a next stage by removal of two of its end areas.

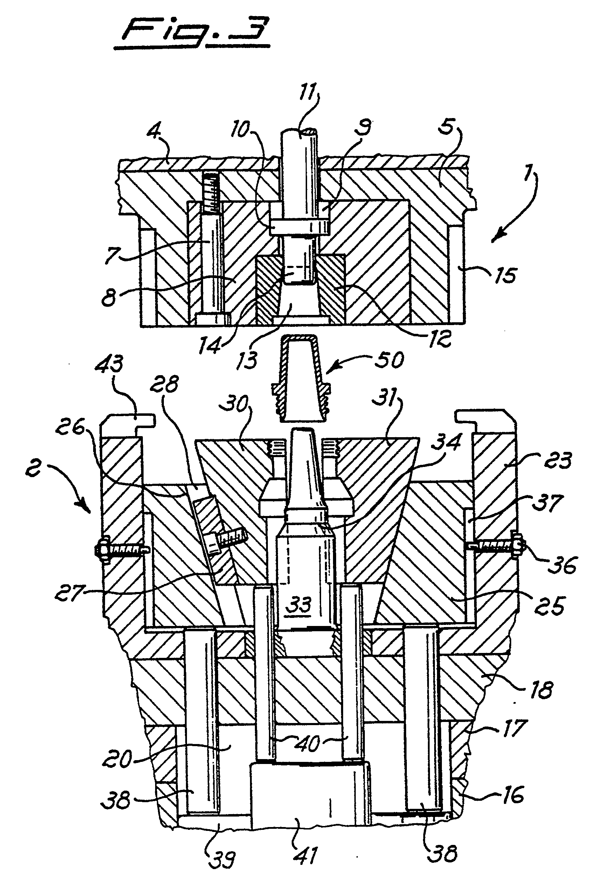

figure 3 shows extraction of battery pole 50 from moulding station.

During this processing stage, the two dies 1, 2 are moved away one from the other and, once envisaged distance between them has been reached, first operating punch 11 is lowered by known means, as illustrated in figure 3, so as to cause pole 50 to come out of first die 1, whereas, simultaneously, second supporting and driving means 30, 31 are raised from pistons 40 thus causing cavity 32 to open for the complete outcoming of pole 50 from dies 1, 2.

Since, as above stated, conversely to processes known, the process is cold-carried out, no waiting time is necessary, and pole 50 can be directly brought to end station. As illustrated in figure 4, in this station, its end areas 51 and 52 are removed by means of a single blanking or milling, by known cutting means 53, 54, which are actuated in a known way and not illustrated in figure. Battery pole 50 in its final shape as represented in figure 5 is thus obtained. The above description clearly shows the advantages offered by process and equipment by this invention, as battery pole 50 obtained is free of shortcomings of conventional poles, as are process and equipment by this invention.

Finally, it is clear that changes and/or modifications may be made to process and equipment by this invention, without such causing it to fall outside with its protective scope.

## Claims

1. A process for making an electrical battery pole or terminal (50) having a truncated conical shape with a ring defining an upper and a lower part by cold-forming a starting solid metal block, said process comprising molding an essentially cylindrical metal block (42), placing the block in a cavity and subjecting the block to a cold-plastic deformation by the compression of an operating punch (33) which causes the metal of the block to flow biaxially in the radial and axial directions, characterized in that the cavity, having the shape of the pole or terminal (50), is constituted by a first (13) and a second (32) coaxial cavities; the first cavity (13) defined by means (12) having the shape of the pole part protruding from a battery cover and being formed in a first die (1), cooperating with an operating punch (11); and the second cavity (32) defined by means (30) and (31), having the shape of the lower part of the battery pole or terminal (50), being formed in a second die (2), cooperating with a second operating punch (33) and being provided with parallel recess (35) on the upper section, and in that the process consists in:
    – inserting the metal block (42) into the first cavity (13) and simultaneously the other end of said block (42) into the second cavity (32);
    – subjecting the metal block (42) to a first axial compression by the action of the second operating punch (33) to shape the pole upper part
    – subjecting the metal block to radial compression and expansion by the contrasting actions of the first operating punch (11) and of the second operating punch (33) which penetrates into the block (42), and expands it into the second cavity (32) to form outer protruding ribs, and
    – lowering punch (11) to expel pole (50) from first die (1) and simultaneously raising said means (30), (31) causing cavity (32) to open for the complete outcoming of pole (50) from dies (1), (2)

2. The process according to claim 1, characterized in that it further comprises the step of subjecting the semi-finished pole or terminal (50) to blanking or milling of the ends (51, 52) thereof.

3. An apparatus for making an electrical battery pole or terminal (50) having the shape defined in Cl. 1 by cold-forming a starting solid metal block (42), said apparatus comprising a first die (1) moving vertically upwardly and downwardly and provided with a cavity (13) and with a first operating punch (11) operating with one end (14) of said cavity (13), and a second stationary die (2) positioned under said first die (1) and provided with a cavity (32) coaxial to cavity (13) of the first die (1), characterized in that the second stationary die (2) is provided with a second operating punch (33) moving vertically through said die (2); the cavity (13) of the first die (1) has the shape of the pole upper part, and the cavity (32) of the second stationary die (2), in the lower part thereof, is shaped according to said punch (33) and in the upper part thereof is shaped in accordance with the shape of the lower part of the pole (50), wherein said second die (2) includes a stationary hollow body (22,23) and moving means (24) for molding the pole (50), said moving means being positioned within said stationary body (22, 23); said moving means comprising:

– first supporting and driving means (25) of said second operating punch (33), having externally a cylindrical shape co-operating with the vertical walls (23) of said stationary body, and internally, a cavity of truncated-conical section, the major base thereof turned upwardly towards said first die (1);

– second supporting and driving means (30) and (31) of said second operating punch (33) being made of a truncated-conical body of cross section corresponding to the cross section of the cavity delimited by said first supporting means (25) and having internally, along the longitudinal axis thereof and coaxially to said cavity (13) of said die (1), a cavity (32), the shape thereof corresponding in the lower part, to the shape of said second operating punch (33) and, in the upper part thereof corresponding to the shape of the end part of said pole (50); said truncated-conical body (30, 31) moving along walls (26) of said truncated-conical cavity of said first supporting and driving means (25) by means of guide (28) in said internal wall (26);

– first supporting cylinders (38) of said first driving means (25) vertically moving by means of a piston (39), and

– second supporting cylinders (40) of said second driving means (30, 31), vertically moving by means of a piston (41).

4. The apparatus according to claim 3 wherein said first die (1) includes:

– a crosspiece (5) having internally a cylindrical cavity (6) fixed to vertically travelling crosspieces (3, 4);

– a block (8) fixed inside a cavity (6) and provided with a cavity (9) in the upper central part thereof, along the longitudinal axis thereof;

– a second block (12) fixed in the lower cavity of said block (8) and provided with a cavity (13), coaxial with said cavity (9) and of truncated-conical shape corresponding to that of pole (50); and

– said first punch (11) having the lower end (14) thereof inserted into said cavity (13) and provided with a protruding ring (10) positioned in said cavity (9).

5. The apparatus according to anyone of the preceding claims, wherein said first supporting means (25) are provided with longitudinal external cavities (37) and vertical walls (23) with throughtype screws (36), the end thereof being inserted into each external cavity (37).

6. The apparatus according to anyone of the preceding claims, wherein said first supporting means (25) have internal walls and are provided with grooves (28) and driving blocks running in said grooves (28) are fixed to said second supporting means (30,31).

7. The apparatus according to anyone of the preceding claims, wherein said cavity (32), formed within said second supporting means (30,31) has from the proximate end to the far end with respect to said first die (1), respectively, a cylindrical, truncated-conical and cylindrical shape, which corresponds to the middle portion (34) of said punch (33), and, in the upper part thereof nearer to said first die (1), recesses (35) essentially parallel one to the other and defining circular grooves of semi-circular cross-section.

8. The apparatus according to anyone of the preceding claims, wherein said second punch (33) is fixed to bottom (22) of said hollow stationary body.-

## Patentansprüche

1. Ein Verfahren fuer die Herstellung eines Elektrobatteriepols oder Steckkontakts (50) mit Kegelstumpfform und einem Ring, der einen oberen und unteren Teil abgrenzt, durch Kaltformung eines festen Anlass-Metallblocks, wobei dieses Verfahren die Formung eines im Wesentlichen zylindrischen Metallblocks (42), die Positionierung des Blocks in einem Hohlraum und die kaltplastische Verformung des Blocks durch Druck einer Patrize (33) umfasst, die das Metall des Blocks dazu bringt, biaxial in radiale und axiale Richtungen zu fliessen, dadurch gekennzeichnet, dass der Hohlraum, der die Form des Pols oder des Steckkontakts (50) aufweist, durch einen ersten (13) und einen zweiten (32) koaxialen Hohlraum gebildet wird; der erste Hohlraum (13), begrenzt durch Element (12), der die Form des Pols aufweist, der vom Batteriedeckel vorragt und in einer ersten Gussform geformt wird (1), mit einer Patrize (11) zusammenarheitet; und der zweite Hohlraum (32), begrenzt durch die Elemente (30) und (31), der die Form des unteren Teils des Batteriepols oder Steckkontakts aufweist (50) aufweist und in einer zweiten Gussform geformt wird, mit einer zweiten Patrize (33) zusammenarbeitet und im oberen Bereich mit einer parallelen Aussparung (35) versehen ist sowie dadurch, dass das Verfahren in Folgendem besteht:

– im Einsatz eines Metallblocks (42) in den ersten Hohlraum (13) und gleichzeitig des anderen Endes des besagten Blocks (42) in den zweiten Hohlraum (32);

– in einer ersten, axialen Druckbehandlung des Metallblocks (42) durch Einwirkung der zweiten Patrize (33) zwecks Formgebung des oberen Polteils

– in einer radialen Druck- und Dehnbehandlung des Metalblocks durch die Kontrastierende Einwirkung der ersten Patrize (33), die in den Block (42) dringt und diesen im zweiten Hohraum (32) ausspannt, um aeussere, vorstehende Rippen zu bilden, wobei die Patrize (11) gesenkt wird, um den Pol (50) aus dem ersten Gesenk (1) zu werfen und gleichzeitig die besagten Elemente (30) (31) angehoben werden, wodurch der Hohlraum zwecks vollstaendigen Auswurfs des Pols (50) aus den Gesenken (1) (2) veranlasst wird, sich zu oeffnen.

2. Ein Verfahren gemaess Anspruch 1, dadurch gekennzeichnet, dass es ausserdem die Arbeitsstufe umfasst, in der die Enden (51, 52) des halbfertigen Pols oder Steckkontakts (50) einer Stanz- oder Fraesverarbeitung unterworfen werden.

3. Ein Geraet fuer die Herstellung eines elektrischen Batteriepols oder Steckkontakt (50) mit der unter Anspruch 1 beschriebenen Form, und zwar durch Kaltformung eines festen Anlass-Metallblocks (42), wobei dieses Geraet ein erstes Gesenk (1) umfasst, das sich senkrecht auf- und abwaerts bewegt und mit einem Hohlraum (13) und einer ersten Patrize (11) versehen ist, die mit dem einen Ende (14) besagten Hohlraums (13) arbeitet, sowie mit einem zweiten, feststehenden Gesenk (2), das sich unter besagtem ersten Gensenk (1) befindet und mit einem Hohlraum (32) ausgeruestet ist, der koaxial zum Hohlraum (13) des ersten Gesenks (1) verlaeuft, gekennzeichnet dadurch, dass das zweite, feststehende Gesenk (2) mit einer zweiten Patrize (33) versehen ist, die sich senkrecht durch das besagte Gesenk (2) bewegt; der Hohlraum (13) des ersten Gesenks (1) hat die Form des oberen Polteils und der Hohlraum (32) des zweiten feststehenden Gesenks (2) ist an dessen unterem Teil entsprechend der besagten Patrize (33) und an dessen oberem Teil entsprechend dem unteren Teil des Pols (50) geformt, wobei das besagte zweite Gesenk (2) einen feststehenden Hohlkoerper (22, 23) und bewegliche Mittel (24) fuer die Formung des Pols (50) umfasst, wobei besagte bewegliche Mittel innerhalb besagtem feststehenden Koerper (22, 23) liegen und besagte bewegliche Mittel folgendes umfassen:

– erste Trag- und Antriebselemente (25) der besagten zweiten Patrize (33), die aussen eine zylindrische Form aufweisen und mit den senkrechten Waenden (23) des besagten feststehenden Koerpers zusammenarbeiten, und innen einen Hohlraum mit Kegelstumpfschnitt aufweisen, dessen Hauptbasis nach oben gegen das erste Gesenk (1) gerichtet ist.

– zweite Trag- und Antriebsmittel (30) und (31) der besagten zweiten Patrize (33), die aus einem Kegelstumpfkoerper bestehen, dessen Querschnitt dem Querschnitt des durch besagte erste Tragelemente (25) begrenzten Hohlraums entspricht und die innen laengs dessen Laengsachse und koaxial zu besagtem Hohlraum (13) des besagten ersten Gesenks (1) einen Hohlraum (32) aufweisen, dessen Form im unteren Teil der Form von besagter zweiter Patrize (33) und im oberen Teil der Form des Endteils von besagtem Pol (50) entspricht; besagter Kegelstumpfkoerper (30, 31) bewegt sich entlang der Waende (26) des besagten Kegelstumpffoermigen Hohlraums der besagten Trag- und Antriebselemente (25), und zwar durch eine Fuehrung (28) in besagter Innenwand (26)

– erste Tragzylinder (38) der besagten ersten Antriebsmittel (25), die sich durch einen Kolben (29) senkrecht bewegen, und

– zweite Tragzylinder (40) der besagten zweiten Antriebsammittel (30, 31), die sich durch einen Kolben (41) senkrecht bewegen.

4. ein Geraet gemaess Anspruch 3, wobei besagtes erstes Gesenk folgendes umfasst:

– ein Querstueck (5) mit innerem zylindrischem Hohlraum (6), befestigt an sich senkrecht bewegenden Querstuecken (3, 4);

– einen Block (8), der innen in einem Hohlraum (6) befestigt und in dessen oberem Mittelteil, laengs dessen Laengsachse, mit einem Hohlraum (9) versehen ist;

– einen zweiten Block (12), der im unteren Hohlraum des besagten Blocks (8) befestigt und mit einem Hohlraum (13) ausgeruestet ist, der koaxial zu besagtem Hohlraum (9) verlaeuft und eine dem Pol (50) entsprechende Kegelstumpfform aufweist; und

– besagte erste Paatrize (11), deren unteres Ende (14) in besagten Hohraum (13) eingesetzt und mit einem vorstehenden Ring (10) versehen ist, der in diesem Hohlraum (9) liegt.

5. Ein Geraet gemaess einem beliebigen der vorausgegangenen Ansprueche, wobei besagte erste Tragelemente (25) mit aeusseren Laengshohlraeumen (37) und senkrechten Waenden (23) mit durchgehenden Schrauben (36) versehen sind, deren Enden jeweils in den aeusseren Hohlraum (37) eingesetzt sind.

6. Ein Geraet gemaess einem beliebigen der vorausgegangenen Ansprueche, wobei besagte erste Tragelemente (25) Innenwaende aufweisen und mit Nuten (28) und Antriebsbloecken versehen sind, die in diesen Nuten (28) verlaufen und an den besagten zweiten Tragelementen (30, 31) befestigt sind.

7. Ein Geraet gemaess einem beliebigen der vor-ausgegangenen Ansprueche, wobei besagter Hohl-raum (32), der sich innerhalb besagter zweiter Tragelemente (30, 31) befindet, vom naechsten zum aeussersten Ende und in Hinsicht auf besagtes erstes Gesenk (1) jeweils eine zylindrische, kegelstumpffoermige und zylindrische Form, die dem mittleren Abschnitt (34) der besagten Patrize (33) entspricht, sowie in dessen oberem Teil, naeher an besagtem erstem Gesenk (1), Aussparungen (35) aufweist, die im wesentlichen parallel zueinander verlaufen und kreisfoermige Rillen mit halbkreisf... rmigem Querschnitt bilden.

8. Ein Gerset gemaess einem beliebigen der vorausgegangenen Ansprueche, wobei besagte zweite Patrize (33) am Boden (22) des besagten feststehenden Hohlkoerpers befestigt ist.

## Revendications

1. Un procédé pour réaliser un pôle de batterie ou borne (50),ayant une forme conique tronçonnée avec un anneau déterminant une partie supérieure et une partie inférieure, par estampage à froid d'un bloc solide de métal initial, tel procédé comprenant le modelage d'un bloc de métal principalement cylindrique (42), mettant le bloc dans une cavité et exposant le bloc à une déformation à froid du plastique par la compression d'un poinçon d'exécution qui provoque le flux biaxial du métal du bloc dans les directions radiale et axiale, caractérisé par le fait que la cavité, ayant la forme du pôle ou borne (50) est constituée par une première (13) et une seconde (32) cavités coaxiales; ainsi la première cavité (13) déterminée par l'instrument (12) ayant la forme de la partie du pôle qui est en saillie par rapport à la calotte de la batterie et étant formée en une première matrice(1) agissant avec un poinçon d'exécution (11); et la deuxième cavité (32) définie par les instruments (30) et (31), ayant la forme de la partie inférieure du pôle de la batterie ou borne (50), étant formée en une seconde matrice (2), qui agit avec un deuxième poinçon d'exécution (33) et étant munie d'une échancrure (35) parallèle sur la section supérieure, et ainsi le procédé consiste dans:

– l'introduction du bloc de métal (42) dans la première cavité (13) et simultanément l'autre extrémité de ce bloc (42) dans la deuxième cavité (32);
– exposant le bloc de métal (42) à une première compression axiale par l'action d'r deuxième poinçon d'exécution (33) pour former la partie supérieure du pôle;
– exposant le bloc de métal à l'expansion et à la compression radiales par les actions contrastantes du premier poinçon d'exécution (11) et du deuxième poinçon d'exécution (33) qui pénètre dans le bloc (42), et le conduit dans la deuxième cavité (32) pour former des rainures en saillie externes; et le poinçon abaissé (II) pour expulser le pôle (50) de la première matrice (1) et simultanément élevant les instruments (30), (31) provoquant l'ouverture de la cavité (32) pour l'expulsion complète du pôle (50) des matrices (1), (2).

2. Le procédé suivant la revendication 1, caractérisé par le fait qu'il comprend même la phase qui expose le pôle semi-fini ou la borne (50) à la découpure ou fraisure de ses extrémités (51, 52).

3. Un appareil pour réaliser un pôle de batterie ou borne (50) ayant la forme définie dans la revendication I par estampage à froid d'un bloc solide de métal initial (42), tel appareil comprenant une première matrice (1) se déplaçant verticalement vers le haut et vers le bas et muni d'une cavité (13) et d'un premier poinçon d'exécution (11) agissant avec une extrémité (14) de cette cavité (13), et une deuxième matrice statique (2) positionnée sous cette première matrice (1) et munie d'une cavité (32) coaxiale à la cavité (13) de la première matrice (1), caractérisée par le fait que la deuxième matrice statique (2) est munie d'un deuxième poinçon d'exécution (33) se déplaçant verticalement à travers telle matrice (2); la cavité (13) de la première matrice (1) a la forme de la partie supérieure du pôle de la batterie et la cavité (32) de la deuxième matrice statique (2), dans la partie intérieure de celle-ci, est formée suivant le poinçon (33) et dans la partie supérieure de celui-ci est formée suivant la forme de la partie inférieure du pôle (50), où cette deuxième matrice (2) comprend un corps statique vide (22, 23) et un instrument mobile (24) pour modeler le pôle (50), tel instrument mobile étant positionné dans tel corps statique (22, 23); celui-ci comprend:

– un premier instrument de support et de commande (25) du deuxième poinçon d'exécution (33), ayant extérieurement une forme cylindrique agissant avec les parois verticales (23) de ce corps statique, et intérieurement, une cavité d'une section tronçonnée et conique, la base principale de celui-ci tournée vers le haut en direction de la première matrice (1);
– un deuxième instrument de support et de commande (30) et (31) de ce deuxième poinçon d'exécution (33) étant réalisé par un corps tronçonné et conique de section transversale correspondant à la section transversale de la cavité délimitée par le premier instrument de support (25) et ayant intérieurement, le long de l'axe longitudinal de celui-ci et de façon coaxiale à ce:te cavité (13) de la matrice (1), une cavité (32), la forme de celui-ci correspondant dans la partie inférieure, à la forme du deuxième poinçon (33) et, dans la partie supérieure de celui-ci correspondant à la forme de la partie extrême du pôle (50); le corps tronçonné et conique (30, 31) se déplaçant le long des parois (26) de la cavité tronçonnée et conique du premier instrument de support et de commande (25) par le moyen du guide (28) dans la paroi interne (26);
– les premiers cylindres de support (38) du premier instrument de commande (25) se déplaçant verticalement par le moyen d'un piston (39), et
– les deuxièmes cylindres de support (40) du deuxième instrument de commande (30, 31), se déplaçant verticalement par le moyen d'un piston (41).

4. L'appareil suivant la revendication 3 dans lequel la première matrice (1) comprend:

– une traverse (5) ayant intérieurement une cavité cylindrique (6) fixée aux traverses (3, 4) se déplaçant verticalement;

– un bloc (8) fixé dans une cavité (6) et muni d'une cavité (9) dans la partie supérieure centrale de celui-ci, le long de ses axes longitudinaux;

– un deuxième bloc (12) fixé dans la cavité inférieure du bloc (8) et muni d'une cavité (13), coaxiale avec la cavité (9) et de la forme tronçonnée et conique correspondant en cela au pôle (50); et

– le premier poinçon (11) ayant l'extrémité inférieure (14) de celui-ci introduite dans la cavité (13) et muni d'un anneau en saillie (10) positionné dans cette cavité (9).

5. L'appareil suivant les revendications précédentes, dans lequel, les premiers instruments de support (25) sont munis de cavités externes longitudinales (37) et les parois verticales (23) de vis de passage (36), l'extrémité de celui-ci étant introduite dans chaque cavité externe (37).

6. L'appareil suivant les revendications prédédentes, dans lequel les premiers instruments de support (25) ont des parois intérieures et sont munis de rainures (28) et les blocs de commande qui passent dans les rainures (28) sont fixés aux deuxièmes instruments de support (30, 31).

7. L'appareil suivant les revendications prédédentes, dans lequel la cavité (32), formée à l'intérieur des deuxièmes instruments de support (30, 31) a, à partir de l'extrémité la plus proche à l'extrémité la plus éloignée par rapport à la première matrice (1), respectivement, une forme tronçonnée, conique et cylindrique, qui correspond à la partie centrale (34) du poinçon (33), et, dans la partie supérieure de celui-ci plus proche de la première matrice (1), les échancrures (35) essentiellement parallèles l'une à l'autre et définissant les rainures circulaires de la section transversale semi-circulaire.

8. L'appareil suivant les revendications prédédentes, dans lequel le deuxième poinçon (33) est fixé sur le fond du corps vide statique.

# *Fig.1*

_Fig.2_

_Fig.4_

_Fig.5_

11

# Fig.3